# EUROPEAN PATENT APPLICATION

(11) **EP 4 155 104 A1**
(43) Date of publication of application: **29.03.2023**
(21) Application number: 22197469.4
(22) Date of filing: 23.09.2022
(51) Int. Cl.: B60K 6/387, B60K 6/40, B60K 6/44, B60K 6/442, B60K 6/445, B60K 6/365, B60W 10/02, B60W 10/06, B60W 10/08, B60W 10/26, B60W 20/13, B60W 20/20, B60W 20/40, B60K 6/38

(54) **HYBRID POWER DRIVE SYSTEM AND VEHICLE**

(30) Priority: 23.09.2021 CN 202111114696
(71) Applicant: Huawei Digital Power Technologies Co., Ltd., Shenzhen, 518043 (CN)
(72) Inventor: Cao, Yi, Shenzhen, Guangdong (CN); Wei, Jingzhou, Shenzhen, Guangdong (CN); Cheng, Yang, Shenzhen, Guangdong (CN); Ma, Wenwu, Shenzhen, Guangdong (CN); Zhong, Hu, Shenzhen, Guangdong (CN)
(74) Representative: Grünecker Patent- und Rechtsanwälte PartG mbB

(57) **Abstract**

The invention relates to a hybrid power drive system and a vehicle. The hybrid power drive system includes an engine, a generator, a first gear drive mechanism, a differential, a second gear drive mechanism, a clutch, a drive motor, a third gear drive mechanism, and a power battery. The first gear drive mechanism is located between the engine and the generator. The first gear drive mechanism is connected to an output shaft of the engine and an input shaft of the generator. The second gear drive mechanism is located between the differential and the output shaft of the engine. The second gear drive mechanism is in transmission connection to the differential and the output shaft of the engine. The clutch is configured to connect or separate the output shaft of the engine to or from the second gear drive mechanism. The third gear drive mechanism is configured to transmissively connect an output shaft of the drive motor to the differential. The engine, the generator, and the first gear drive mechanism are distributed in sequence in an axial direction of the engine. The second gear drive mechanism, the differential, the third gear drive mechanism, and the drive motor are distributed in sequence in a direction that is intersected with the axial direction of the engine.

## Description

### TECHNICAL FIELD

This application relates to the field of transport vehicle technologies, and in particular, to a hybrid power drive system and a vehicle.

### BACKGROUND

A hybrid vehicle is a vehicle whose vehicle drive system consists of two or more single drive systems that can run at the same time. Based on an actual vehicle driving status, driving power of the hybrid vehicle is independently provided by the single drive system, or provided by both the two or more single drive systems. Generally, the hybrid vehicle is a hybrid electric vehicle (HEV), that is, the hybrid vehicle uses an internal combustion engine (a diesel engine or a gasoline engine) and an electric engine as a power source. Other alternative fuels, for example, compressed natural gas, propane, and ethanol fuels, may be applicable to a modified engine.

A hybrid power drive system in a related technology includes a generator, a drive motor, gears, and an engine. The generator and the drive motor are coaxially disposed, the engine is located on a side that is of the drive motor and that is away from the generator in an axial direction, and a gear box is located between the drive motor and the engine.

The engine, the generator, and the drive motor are distributed in the axial direction of the engine. Therefore, it is difficult to design dimensions of the hybrid power drive system in the axial direction. The generator can only be made into a flat type. When the flattened generator is assembled, a through-shaft operation needs to be performed for a rotor shaft. The through-shaft operation is difficult to perform for the rotor shaft of the generator. During the through-shaft operation, an iron core or a rotor retaining ring is easy to be damaged, and there is a high requirement on through-shaft precision.

### SUMMARY

Embodiments of this application provide a hybrid power drive system and a vehicle, to resolve a difficulty in designing dimensions of a hybrid power drive system in an axial direction.

To achieve the foregoing objectives, the following technical solutions are used in this application.

According to a first aspect, an embodiment of this application provides a hybrid power drive system. The hybrid power drive system includes an engine, a generator, a first gear drive mechanism, a differential, a second gear drive mechanism, a clutch, a drive motor, a third gear drive mechanism, and a power battery. The engine is configured to output power. The generator is configured to convert the power output by the engine into electric energy. The first gear drive mechanism is located between the engine and the generator. An input end of the first gear drive mechanism is in transmission connection to an output shaft of the engine, and an output end of the first gear drive mechanism is in transmission connection to an input shaft of the generator. The second gear drive mechanism is located between the differential and the output shaft of the engine. In addition, the second gear drive mechanism is connected to the differential and the output shaft of the engine. The clutch is disposed on the output shaft of the engine, and the clutch is configured to connect or separate the output shaft of the engine to or from the second gear drive mechanism. The third gear drive mechanism is configured to transmissively connect the output shaft of the drive motor to the differential. The power battery is electrically connected to the generator and the drive motor. The drive motor is configured to convert electric energy output by the power battery into kinetic energy. In addition, the engine, the generator, and the first gear drive mechanism are distributed in sequence in an axial direction of the engine. The second gear drive mechanism, the differential, the third gear drive mechanism, and the drive motor are distributed in sequence in a direction that is intersected with the axial direction of the engine. Therefore, in the axial direction of the engine, positions of the second gear drive mechanism, the differential, the third gear drive mechanism, and the drive motor may intersect or overlap with a position of the first gear drive mechanism. In this way, in the hybrid power drive system, it is easier to design dimensions of the drive motor, the engine, and the generator in the axial direction of the engine, and the generator does not need to be designed as a flat type. Further, a through-shaft operation does not need to be performed for a rotor shaft of the generator, thereby avoiding various problems caused by the through-shaft operation performed for the rotor shaft of the generator.

In an optional implementation of the first aspect, the hybrid power drive system further includes a controller. The controller is configured to control both the engine and the generator not to work. The clutch separates the output shaft of the engine from the second gear drive mechanism, the power battery supplies power to the drive motor, and the drive motor drives, by using the third gear drive mechanism, the differential to run. In this case, the hybrid power drive system is in an electric drive mode. Alternatively, the controller is configured to control the engine and the generator to work. The clutch separates the output shaft of the engine from the second gear drive mechanism. The engine drives, by using the first gear drive mechanism, a rotor of the generator to rotate and generate electric energy. The electric energy that is generated by the generator is stored in the power battery. The power battery supplies power to the drive motor. The drive motor drives, by using the third gear drive mechanism, the differential to run. In this case, the hybrid power drive system is in a serial extended-range mode. Alternatively, the controller is configured to control the engine to work and control the generator not to work. The clutch connects the output shaft of the engine to the second gear drive mechanism. The engine drives, by using the second gear drive mechanism, the differential to run. The power battery supplies power to the drive motor. The drive motor drives, by using the third gear drive mechanism, the differential to run. In this case, the hybrid power drive system is in a parallel drive mode. Alternatively, the controller is configured to control the engine to work. The clutch connects the output shaft of the engine to the second gear drive mechanism. The controller controls the generator and the drive motor not to work. The engine drives, by using the second gear drive mechanism, the differential to run. In this case, the hybrid power drive system is in an engine direct drive mode. Alternatively, the controller is configured to control the engine, the generator, and the drive motor to work. The clutch connects the output shaft of the engine to the second gear drive mechanism. The engine drives, by using the first gear drive mechanism, a rotor of the generator to rotate and generate electric energy. The electric energy that is generated by the generator is stored in the power battery. The power battery supplies power to the drive motor, the drive motor drives, by using the third gear drive mechanism, the differential to run. The engine drives, by using the second gear drive mechanism, the differential to run. In this case, the hybrid power drive system is in a hybrid drive mode. The hybrid power drive system may implement a plurality of drive modes.

In an optional implementation of the first aspect, the input shaft of the generator is coaxially disposed with the output shaft of the engine. The solution in which the generator is coaxially disposed with the engine is applicable to a vehicle that has a requirement on designing dimensions of the hybrid power drive system in the axial direction of the engine.

In an optional implementation of the first aspect, the input shaft of the generator is parallel to the output shaft of the engine, and the engine is located between the generator and the differential. A plurality of gears in the first gear drive mechanism may be staggered between the output shaft of the engine and the input shaft of the generator in a radial direction of the engine. Therefore the dimensions of the hybrid power drive system are reduced as much as possible in the axial direction of the engine, and a structure of the hybrid power drive system is more compact in the axial direction of the engine. This meets a high requirement on designing dimensions of this system in the axial direction of the engine in the vehicle body.

In an optional implementation of the first aspect, the first gear drive mechanism includes a first driving gear and a driven gear. The first driving gear is disposed on the output shaft of the engine. The driven gear is disposed on the input shaft of the generator, the first driving gear is engaged with the driven gear, and a quantity of teeth of the first driving gear is greater than or equal to that of the driven gear. The first gear drive mechanism has a simple structure and low costs.

In an optional implementation of the first aspect, the first gear drive mechanism includes a first driving gear, a driven gear, and a first idler. The first driving gear is disposed on the output shaft of the engine. The driven gear is disposed on the input shaft of the generator, and a quantity of teeth of the first driving gear is greater than or equal to that of the driven gear. The first idler is disposed between the first driving gear and the driven gear, and is engaged with the first driving gear and the driven gear. This solution is applicable to an application scenario in which the input shaft of the generator and the output shaft of the engine are disposed opposite to each other and a rotation direction of the input shaft of the generator is the same as that of the output shaft of the engine.

In an optional implementation of the first aspect, the first gear drive mechanism is a speed increasing gear mechanism. The speed increasing gear mechanism includes a first driving gear, a first transmission gear, a second transmission gear, and a driven gear. The first driving gear is disposed on the output shaft of the engine. The first transmission gear is engaged with the first driving gear. The second transmission gear is coaxially disposed with the first transmission gear. The driven gear is disposed on the input shaft of the generator, and the driven gear is engaged with the second transmission gear. The first gear drive mechanism may form a two-stage speed increasing gear mechanism, and this greatly optimizes a working range of the generator when the generator generates power and improves power generation efficiency of the generator. In addition, the clutch and a hydraulic system do not need to be disposed, so that a structure is simple and costs are low.

In an optional implementation of the first aspect, the first gear drive mechanism is a single-row planet gear set. The single-row planet gear set includes an inner ring gear, a planet carrier, a plurality of planet gears, and a sun gear. The plurality of planet gears are disposed on the planet carrier, and the plurality of planet gears are circumferentially distributed along the inner ring gear and engaged with the inner ring gear. The sun gear is engaged with the plurality of planet gears. The input shaft of the generator is fastened to the sun gear. One of the planet carrier and the inner ring gear is fastened to the output shaft of the engine. The other of the planet carrier and the inner ring gear is fastened to a housing of the generator. The first gear drive mechanism has a compact structure, and this further reduces the dimensions of the hybrid power drive system in the axial direction of the engine.

In an optional implementation of the first aspect, the hybrid power drive system further includes a common driven gear, where the common driven gear is coaxially disposed with the differential. The second gear drive mechanism includes a second driving gear, and a third transmission gear and a fourth transmission gear. The second driving gear is disposed on the output shaft of the engine. The third transmission gear is engaged with the second driving gear. The fourth transmission gear is engaged with the common driven gear. The second gear drive mechanism and the common driven gear form a first speed reducing gear mechanism. The first speed reducing gear mechanism may be a two-stage speed reducing gear mechanism. The third gear drive mechanism includes a third driving gear, and a fifth transmission gear and a sixth transmission gear that are coaxially disposed. The third driving gear is disposed on the output shaft of the drive motor and engaged with the fifth transmission gear. The sixth transmission gear is engaged with the common driven gear, and a quantity of teeth of the sixth transmission gear is less than that of the common driven gear. The third gear drive mechanism and the common driven gear form a second speed reducing gear mechanism. The second speed reducing gear mechanism may be a two-stage speed reducing gear mechanism. In addition, the second gear drive mechanism and the third gear drive mechanism share a same gear when transmitting power to the differential, so that a quantity of required gears are reduced, and structural complexity and costs of a transmission apparatus are reduced.

In an optional implementation of the first aspect, the hybrid power drive system further includes a common driven gear, where the common driven gear is coaxially disposed with the differential. The second gear drive mechanism includes a second driving gear and a second idler, where the second driving gear is disposed on the output shaft of the engine. The second idler is located between the common driven gear and the second driving gear, and the second idler is engaged with the common driven gear and the second driving gear. The quantity of teeth of the second driving gear is less than that of the common driven gear. The third gear drive mechanism includes a third driving gear, and a fifth transmission gear and a sixth transmission gear that are coaxially disposed. The third driving gear is disposed on the output shaft of the drive motor and engaged with the fifth transmission gear. The sixth transmission gear is engaged with the common driven gear. The third gear drive mechanism and the common driven gear form a second speed reducing gear mechanism. The second speed reducing gear mechanism may be a two-stage speed reducing gear mechanism. The second gear drive mechanism has a simpler structure, and is applicable to an application scenario in which a rotation direction of the second driving gear is the same as that of the common driven gear.

According to a second aspect, an embodiment of this application further provides a vehicle. The vehicle includes a vehicle body and the hybrid power drive system in the foregoing embodiment. At least three wheels are rotationally disposed on the vehicle body, and at least two of the at least three wheels are disposed opposite to each other. The hybrid power drive system is disposed on the vehicle body. The differential in the hybrid power drive system is in transmission connection to any two opposite wheels of the at least three wheels. Because the structure of the hybrid power drive system in the vehicle in this embodiment of this application is the same as that of the hybrid power drive system in the foregoing embodiment, the two systems can resolve a same technical problem and obtain same technical effect. Details are not described herein again.

### BRIEF DESCRIPTION OF DRAWINGS

FIG. 1 is a schematic diagram of a structure of a vehicle as a car according to an embodiment of this application;
FIG. 2 is a schematic diagram of module composition of a hybrid power drive system in a vehicle according to an embodiment of this application;
FIG. 3 is a schematic diagram of connections and orientations of apparatuses in a hybrid power drive system in a vehicle according to an embodiment of this application;
FIG. 4 is a schematic diagram of connections of apparatuses in a hybrid power drive system in Example 1;
FIG. 5 is a schematic diagram of power transfer when a hybrid power drive system is in an electric drive mode in Example 1;
FIG. 6 is a schematic diagram of power transfer when a hybrid power drive system is in a serial extended-range mode in Example 1;
FIG. 7 is a schematic diagram of power transfer when a hybrid power drive system in Example 1 is in a parallel drive mode;
FIG. 8 is a schematic diagram of power transfer when a hybrid power drive system in Example 1 is in an engine direct drive mode;
FIG. 9 is a schematic diagram of power transfer when a hybrid power drive system in Example 1 is in a hybrid drive mode;
FIG. 10 is a schematic diagram of connections of apparatuses in a hybrid power drive system in Example 2;
FIG. 11 is a schematic diagram of connections of apparatuses in a hybrid power drive system in Example 3;
FIG. 12 is a schematic diagram of connections of apparatuses in a hybrid power drive system in Example 4;
FIG. 13 is a schematic diagram of connections of apparatuses in a hybrid power drive system in Example 5;
FIG. 14 is a schematic diagram of connections of apparatuses in a hybrid power drive system in Example 6;
FIG. 15 is a schematic diagram of connections of apparatuses in a hybrid power drive system in Example 7;
FIG. 16 is a schematic diagram of connections of apparatuses in a hybrid power drive system in Example 8; and
FIG. 17 is a schematic diagram of connections of apparatuses in a hybrid power drive system in Example 9.

### Reference numerals:

1000 - vehicle, 100 - vehicle body, 200 - wheel, 300 - hybrid power drive system, 1 - engine, 11 - output shaft of engine 1,2- generator, 21 - input shaft, 3 - drive motor, 31 - output shaft of drive motor 3, 4 - power battery, 5 - differential, 6 - clutch, 7 - transmission apparatus, 71 - first gear drive mechanism, 711 - first driving gear, 712 - first transmission gear, 713 - second transmission gear, 714 - driven gear, 715 - first idler, 716 - inner ring gear, 717 - planet gear, 718 - planet carrier, 719 - sun gear, 72 - second gear drive mechanism, 721 - second driving gear, 722 - second idler, 723 - third transmission gear, 724 - fourth transmission gear, 73 - third gear drive mechanism, 731 - third driving gear, 732 - fifth transmission gear, 733 - sixth transmission gear, 74 - common driven gear, and 8 - controller.

### DESCRIPTION OF EMBODIMENTS

To make the objectives, technical solutions, and advantages of this application clearer, the following further describes this application in detail with reference to the accompanying drawings.

The following terms "first" and "second" are merely intended for a purpose of description, and shall not be understood as an indication or implication of relative importance or implicit indication of a quantity of indicated technical features. Therefore, a feature limited by "first" or "second" may explicitly or implicitly include one or more of the features. In the descriptions of this application, unless otherwise stated, "a plurality of' means two or more than two.

In addition, in this application, terms of direction such as "upper", "lower", "left", "right", "horizontal", and "vertical" are defined relative to an illustrated placement position of a component in an accompanying drawing. It should be understood that these directional terms are relative concepts and are used to describe and clarify relativity, and may be changed accordingly as a placement position of the component in the accompanying drawing changes.

In this application, it should be noted that the term "connection" should be understood in a broad sense unless otherwise expressly specified and limited. For example, the "connection" may be a fixed connection, may be a detachable connection, may be an integral connection; may be a direct connection, or may be an indirect connection implemented by using a medium. The electrical connection may be understood as a connection form that components are physically in contact and electrically conducted, or may be understood as a connection form that different components are connected by using physical lines capable of transmitting an electrical signal, such as a PCB copper foil or a conducting wire in a circuit structure. The term "connection" refers to a connection of a mechanical structure and a physical structure.

Embodiments of this application provide a vehicle. The vehicle may be a car, an off-road vehicle, a bus, or a truck. This is not limited in embodiments of this application.

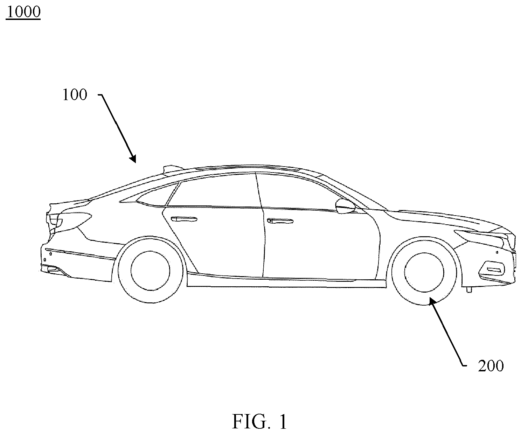

Refer to FIG. 1. FIG. 1 is a three-dimensional diagram of an electronic device according to some embodiments of this application. It can be learned based on the foregoing description that, in this embodiment, a vehicle 1000 is a car. The vehicle 1000 includes a vehicle body 100, wheels 200, and a hybrid power drive system 300. The wheels 200 may be rotationally disposed on the vehicle body 100. The hybrid power drive system 300 is disposed on the vehicle body 100 and is in transmission connection to the wheels 200. The hybrid power drive system 300 can drive the wheels 200 to rotate, that is, the vehicle is a hybrid vehicle. The vehicle 1000 may have three or more wheels 200. This is not limited in this application. It should be noted that at least two wheels of all the wheels 200 of the vehicle 1000 are disposed opposite to each other.

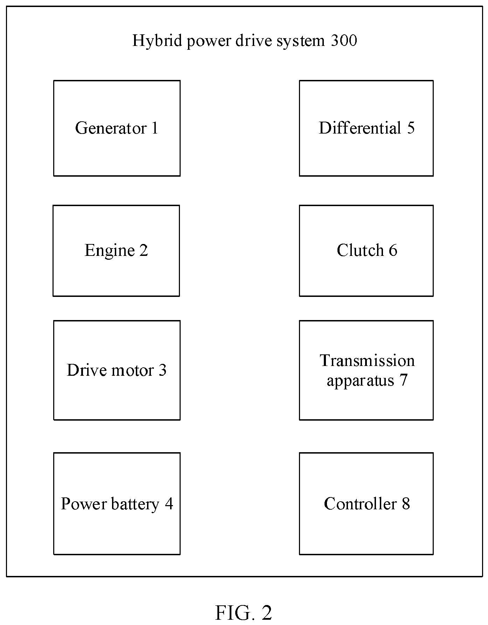

Refer to FIG. 2. The hybrid power drive system 300 in this embodiment of this application includes an engine 1, a generator 2, a drive motor 3, a power battery 4, a differential 5, a clutch 6, and a transmission apparatus 7. The engine 1 is configured to output power. For example, the engine 1 may be a gasoline engine or a diesel engine. The generator 2 is configured to convert power output by the engine 1 into electric energy. The generator 2 is electrically connected to the power battery 4, and the generator 2 may charge the power battery 4. The drive motor 3 is electrically connected to the power battery 4, and the power battery 4 may supply power to the drive motor 3. The drive motor 3 is configured to convert electric energy output by the power battery 4 into kinetic energy. A differential 5 is in transmission connection to the any two opposite wheels 200 on the vehicle 1000. The clutch 6 is configured to connect or separate the engine 1 to or from the differential 5, to switch a drive mode of the vehicle 1000.

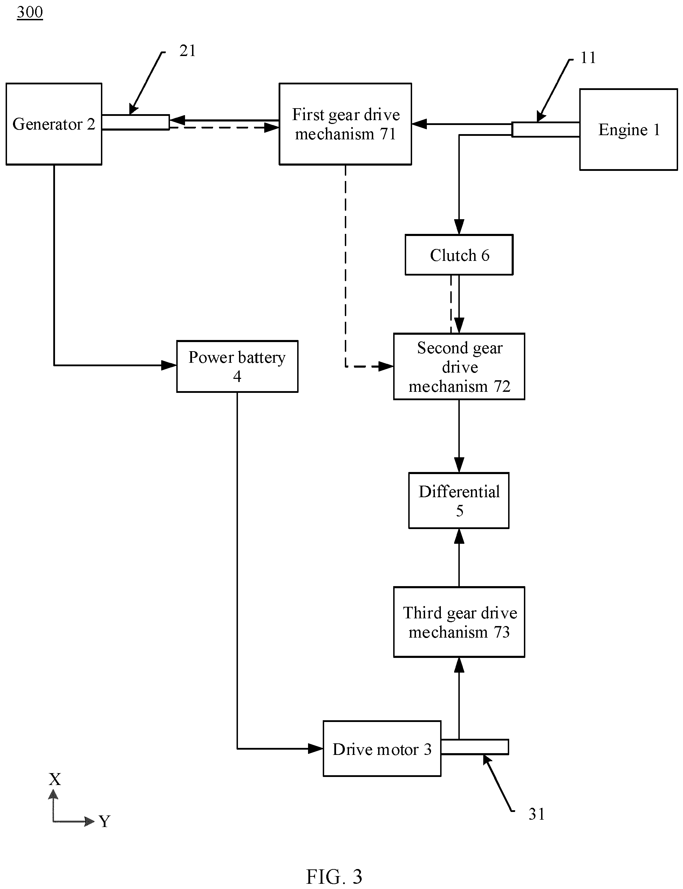

The transmission apparatus 7 is a gear drive mechanism, with high transmission precision. The transmission apparatus 7 includes a first gear drive mechanism 71, a second gear drive mechanism 72, and a third gear drive mechanism 73 shown in FIG. 3.

As shown in FIG. 3, the first gear drive mechanism 71 is located between the engine 1 and the generator 2, an input end of the first gear drive mechanism 71 is in transmission connection to an output shaft 11 of the engine 1, and an output end of the first gear drive mechanism 71 is in transmission connection to an input shaft 21 of the generator 2. The engine 1 drives, by using the first gear drive mechanism 71, the generator 2 to run, so that the generator 2 can generate power. In addition, electric energy of the generator 2 may be stored in the power battery 4, so that the electric energy may be supplemented to the power battery 4 when the power battery 4 level is insufficient.

The second gear drive mechanism 72 is located between the differential 5 and the output shaft 11 of the engine 1, an input end of the second gear drive mechanism 72 is in transmission connection to the output shaft 11 of the engine 1, and an output end of the second gear drive mechanism 72 is in transmission connection to the differential 5. The engine 1 drives, by using the second gear drive mechanism 72, the differential 5 to run, so that the differential 5 can drive the wheels 200 to rotate, to implement a working mode in which the engine 1 drives the wheels 200 of the vehicle 1000 to rotate. The clutch 6 is disposed on the output shaft 11 of the engine 1, and the clutch 6 is configured to connect or separate the output shaft 11 of the engine 1 to or from the second gear drive mechanism 72. Therefore, the clutch 6 may control whether the vehicle 1000 uses the engine 1 to drive the wheels 200 of the vehicle 1000 to rotate, so that the vehicle 1000 can run in different drive modes, to improve working efficiency of the engine 1 and reduce energy consumption.

An input end of the third gear drive mechanism 73 is in transmission connection to an output shaft 31 of the drive motor 3, and an output end of the third gear drive mechanism 73 is in transmission connection to the differential 5. The drive motor 3 may drive, by using the third gear drive mechanism 73, the differential 5 to run, so that the differential 5 can drive the wheels 200 to rotate, to implement a working mode in which the drive motor 3 drives the wheels 200 of the vehicle 1000 to rotate.

In addition, the engine 1, the generator 2, and the first gear drive mechanism 71 are distributed in sequence in an axial direction of the engine 1 (the axial direction of the engine is a Y-axis direction in FIG. 3). The second gear drive mechanism 72, the differential 5, the third gear drive mechanism 73, and the drive motor 3 are distributed in sequence in a direction that is intersected with the axial direction of the engine 1. For example, the second gear drive mechanism 72, the differential 5, the third gear drive mechanism 73, and the drive motor 3 are distributed in an X-axis direction shown in FIG. 3. Therefore, in the axial direction of the engine 1, positions of the second gear drive mechanism 72, the differential 5, the third gear drive mechanism 73, and the drive motor 3 may intersect or overlap with a position of the first gear drive mechanism 71. Therefore, in the hybrid power drive system 300 of this application, it is easier to design dimensions of the drive motor 3, the engine 1, and the generator 2 in the Y-axis direction, and the generator 2 does not need to be designed as a flat type. Further, a through-shaft operation does not need to be performed for a rotor shaft of the generator 2, thereby avoiding various problems caused by the through-shaft operation performed for the rotor shaft of the generator 2.

It should be noted that the first gear drive mechanism 71 may be a one-gear increaser, or may be a two-gear increaser or a multi-gear increaser. The following uses an example in which the first gear drive mechanism 71 is a one-stage speed increaser. The first gear drive mechanism 71 may be a one-stage speed increasing gear mechanism, or may be a two-stage speed increasing gear mechanism, or may be a more than two-stage gear mechanism. This is not limited in this application. The first gear drive mechanism 71 is a speed increasing gear mechanism, and this optimizes a working range of the generator 2 when the generator 2 generates power and improves power generation efficiency of the generator 2. In addition, the clutch 6 and a hydraulic system do not need to be disposed, so that a structure is simple and costs are low. Both the second gear drive mechanism 72 and the third gear drive mechanism may be a one-gear reducer, may be a two-gear reducer, or may be a multi-gear reducer. The following uses an example in which both the second gear drive mechanism 72 and the third gear drive mechanism 73 are one-gear reducers. Both the second gear drive mechanism 72 and the third gear drive mechanism 73 may form a one-stage speed reducing gear mechanism, a two-stage speed reducing gear mechanism, or a more than two-stage speed reducing gear mechanism. This is not limited in this application. The second gear drive mechanism 72 and the third gear drive mechanism 73 may flexibly supplement power output torque of the engine 1 and the drive motor 3.

Therefore, based on the structure of the transmission apparatus 7, the following uses an example in which the vehicle 1000 is a four-wheeled vehicle. The differential 5 may be separately in transmission connection to two front wheels of the vehicle 1000, that is, the vehicle 1000 is a front-wheel drive vehicle. Alternatively, the differential 5 may also be separately in transmission connection to two rear wheels of the vehicle 1000, that is, the vehicle 1000 is a rear-wheel drive vehicle. The transmission apparatus 7 is a gear drive mechanism, a transmission distance is short, the engine 1 generally needs to be disposed in a device container under a front cover of the vehicle body 100, and the differential 5 is in transmission connection to the two rear wheels. This requires more transmission structures. Therefore, the hybrid power drive system 300 in this embodiment of this application is more applicable to a front-wheel drive vehicle.

Based on the foregoing structure, the vehicle 1000 in this embodiment of this application further includes a controller 8. The controller 8 is electrically connected to the engine 1, the generator 2, the drive motor 3, and the clutch 6. The controller 8 in this embodiment of this application may control the engine 1, the generator 2, the drive motor 3, and the clutch 6 to be in different states, to implement different driving working modes of the vehicle 1000.

The following uses the hybrid power drive system 300 shown in FIG. 3 as an example to describe a plurality of working modes of the hybrid power drive system 300.

When the power battery 4 level is sufficient or the vehicle 1000 is under a low-speed working condition, the vehicle 1000 is in an electric drive mode. The controller 8 controls both the engine 1 and the generator 2 not to work. The clutch 6 separates the output shaft 11 of the engine 1 from the second gear drive mechanism 72. The power battery 4 supplies power to the drive motor 3. The drive motor 3 drives, by using the third gear drive mechanism 73, the differential 5 to run. In this case, the vehicle 1000 runs only under driving of the drive motor 3.

When the power battery 4 level is insufficient, the vehicle 1000 is in the serial extended-range mode. The controller 8 controls the engine 1 and the generator 2 to work. The clutch 6 separates the output shaft 11 of the engine 1 from the second gear drive mechanism 72. The engine 1 drives, by using the first gear drive mechanism 71, a rotor of the generator 2 to rotate and generate electric energy. The electric energy that is generated by the generator 2 is stored in the power battery 4. The power battery 4 supplies power to the drive motor 3. The drive motor 3 drives, by using the third gear drive mechanism 73, the differential 5 to run.

When the power battery 4 level is sufficient and the vehicle 1000 has a high power requirement (for example, a working condition of sudden acceleration), the vehicle 1000 is in the parallel drive mode. The controller 8 controls the engine 1 to work and control the generator 2 not to work. The clutch 6 connects the output shaft 11 of the engine 1 to the second gear drive mechanism 72. The engine 1 drives, by using the second gear drive mechanism 72, the differential 5 to run. The power battery 4 supplies power to the drive motor 3. The drive motor 3 drives, by using the third gear drive mechanism 73, the differential 5 to run. In this case, the vehicle 1000 runs under driving of the drive motor 3 and the engine 1.

It should be noted that, when the power requirement of the vehicle 1000 is high, the controller 8 controls the engine 1, the generator 2, and the drive motor 3 to work. The clutch 6 connects the output shaft 11 of the engine 1 to the second gear drive mechanism 72. The generator 2 is used as a motor. The first gear drive mechanism 71 is in transmission connection to the second gear drive mechanism 72. The generator 2 drives, by using the first gear drive mechanism 71 and the second gear drive mechanism 72, the differential 5 to run. The engine 1 drives, by using the second gear drive mechanism 72, the differential 5 to run, and the drive motor 3 drives, by using the third gear drive mechanism 73, the differential 5 to run. In this case, the vehicle 1000 runs under driving of the drive motor 3, the generator 2, and the engine 1.

When the power battery 4 level is insufficient, under a working condition that direct drive efficiency of the engine 1 is higher than simultaneous driving efficiency of the engine 1 and the drive motor 3 in the serial extended-range mode, the vehicle 1000 is in the engine direct drive mode, that is, the vehicle 1000 runs under direct driving of the engine 1. The controller 8 controls the engine 1 to work. The clutch 6 connects the output shaft 11 of the engine 1 to the second gear drive mechanism 72. The controller controls both the generator 2 and the drive motor 3 not to work. The engine 1 may drive, by using the second gear drive mechanism 72, the differential 5 to run. In this case, the vehicle 1000 runs only under driving of the engine 1. It should be noted that, when the working efficiency of the engine 1 is high and the power battery 4 is not fully charged, the controller 8 controls both the engine 1 and the generator 2 to work. The clutch 6 connects the output shaft 11 of the engine 1 to the second gear drive mechanism 72. The controller controls the drive motor 3 not to work. A portion of the efficiency of the engine 1 may be used to drive, by using the second gear drive mechanism 72, the differential 5 to run. Residual efficiency of the engine 1 may be used to drive, by using the first gear drive mechanism 71, the rotor of the generator 2 to rotate and generate the electric energy, and the electric energy that is generated by the generator 2 may be stored in the power battery 4.

When the power battery 4 level is insufficient and the vehicle 1000 has a high power requirement (for example, a working condition of sudden acceleration), the vehicle 1000 is in the hybrid drive mode. The controller 8 controls the engine 1, the generator 2, and the drive motor 3 to work. The clutch 6 connects the output shaft 11 of the engine 1 to the second gear drive mechanism 72, the engine 1 drives, by using the first gear drive mechanism 71, the rotor of the generator 2 to rotate and generate the electric energy, the electric energy that is generated by the generator 2 is stored in the power battery 4, the power battery 4 supplies power to the drive motor 3, the drive motor 3 drives, by using the third gear drive mechanism 73, the differential 5 to run, and the engine 1 drives, by using the second gear drive mechanism 72, the differential 5 to run. In this case, the vehicle 1000 runs under the driving of the drive motor 3 and the engine 1.

The following specifically describes a structure of the hybrid power drive system 300 in this embodiment of this application with reference to specific embodiments. The first gear drive mechanism 71 is the one-stage speed increaser, and both the second gear drive mechanism 72 and the third gear drive mechanism 73 are the one-stage speed reducer.

### Example 1

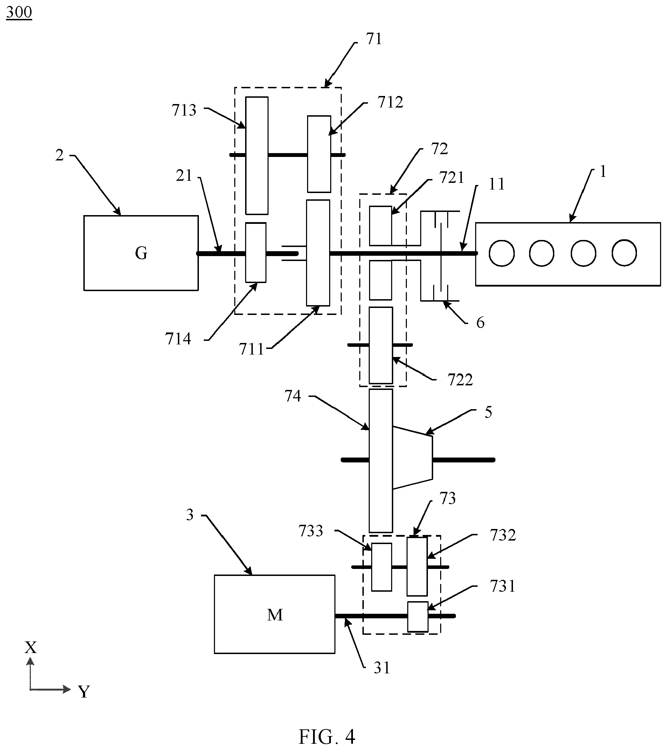

As shown in FIG. 4, in the hybrid power drive system 300 in this example, the input shaft 21 of the generator 2 is coaxially disposed with the output shaft 11 of the engine 1. For example, the input shaft 21 of the generator 2 and the output shaft 11 of the engine 1 are independent of each other, and an axial direction of the input shaft 21 of the generator 2 and an axial direction of the output shaft 11 of the engine 1 are a same straight line. For another example, the input shaft 21 of the generator 2 and the output shaft 11 of the engine 1 are coaxially disposed and connected by using a bearing. Connection performed by using a bearing means that a part that is of the output shaft 11 of the engine 1 and that is close to the input shaft 21 of the generator 2 may be of a hollow structure, and the input shaft 21 of the generator 2 may be sleeved in the hollow structure of the output shaft 11 of the engine 1 by using a bearing. Alternatively, connection performed by using a bearing means that a part that is of the input shaft 21 of the generator 2 and that is close to the output shaft 11 of the engine 1 may be of a hollow structure, and the output shaft 11 of the engine 1 may be sleeved in the hollow structure of the input shaft 21 of the generator 2 by using a bearing.

The part that is of the output shaft 11 of the engine 1 and that is close to the input shaft 21 of the generator 2 in FIG. 4 is of a hollow structure, and the input shaft 21 of the generator 2 may be sleeved in the output shaft 11 of the engine 1 by using the bearing. Therefore, the output shaft 11 of the engine 1 does not directly drive the input shaft 21 of the generator 2 to rotate, and the input shaft 21 of the generator 2 may be conveniently disposed. At the same time, dimensions of the hybrid power drive system 300 may be further reduced in the Y-axis direction, and this solution may be applicable to a vehicle that has a requirement on designing dimensions of the hybrid power drive system 300 in the axial direction of the engine 1.

In addition, still as shown in FIG. 4, the transmission apparatus 7 in the hybrid power drive system 300 further includes a common driven gear 74, and the common driven gear 74 is coaxially disposed with the differential 5. For example, the differential 5 is separately connected to the two wheels 200 by using two half axles, and the common driven gear 74 is disposed on a half axle through which the differential 5 is connected with one wheel 200. The first gear drive mechanism 71 may be a two-stage speed increasing gear mechanism. The second gear drive mechanism 72 and the common driven gear 74 may form a one-stage speed reducing gear mechanism, or may form a two-stage speed reducing gear mechanism. The third gear drive mechanism 73 and the common driven gear 74 may form a first-stage gear reduction mechanism, or may form a second-stage gear reduction mechanism.

For example, still as shown in FIG. 4, the first gear drive mechanism 71 may include a first driving gear 711, a first transmission gear 712, a second transmission gear 713, and a driven gear 714. The first driving gear 711 is disposed on the output shaft 11 of the engine 1, and the first transmission gear 712 is engaged with the first driving gear 711. The second transmission gear 713 is coaxially disposed with the first transmission gear 712, that is, the second transmission gear 713 and the first transmission gear 712 are fastened on a same shaft. The driven gear 714 is disposed on the input shaft 21 of the generator 2, and the driven gear 714 is engaged with the second transmission gear 713. The engine 1 may transmit power to the generator 2 by using the first driving gear 711, the first transmission gear 712, the second transmission gear 713, and the driven gear 714 in sequence. A quantity of teeth of the first driving gear 711 may be greater than that of the first transmission gear 712. The first driving gear 711 and the first transmission gear 712 form a first-stage speed increasing gear set of the two-stage speed increasing gear mechanism. In addition, the quantity of teeth of the second transmission gear 713 is greater than that of the driven gear 714. Therefore, the driven gear 714 and the second transmission gear 713 form a second-stage speed increasing gear set of the two-stage speed increasing gear mechanism. Therefore, the first gear drive mechanism 71 may have a small volume, and this greatly optimizes a working range of the generator 2 when the generator 2 generates power and improves power generation efficiency of the generator 2. In addition, the clutch and a hydraulic system do not need to be disposed, so that a structure is simple and costs are low.

It should be noted that, in some embodiments, the quantity of teeth of the first driving gear 711 may be equal to or less than that of the first transmission gear 712, and alternatively, the quantity of teeth of the second transmission gear 713 may be equal to or less than that of the driven gear 714. However, in the foregoing two solutions, a transmission ratio of the entire first gear drive mechanism 71 is less than 1, that is, the first gear drive mechanism 71 is a speed increasing gear mechanism, to be applicable to more application scenarios.

The second gear drive mechanism 72 may include a second driving gear 721 and a second idler 722. The second driving gear 721 may be disposed (for example, connected by using a bearing) on the output shaft 11 of the engine 1. The second idler 722 is located between the common driven gear 74 and the second driving gear 721, and the second idler 722 is separately engaged with the common driven gear 74 and the second driving gear 721. A quantity of teeth of the second driving gear 721 is less than that of the common driven gear 74. The clutch 6 may be disposed on a side that is of the second driving gear 721 and that is close to the engine 1. For example, the output shaft 11 of the engine 1 includes a first half output shaft and a second half output shaft. The second driving gear 721 is disposed on the first half output shaft, and the second half output shaft is connected to a flywheel of the engine 1. The clutch 6 may be disposed between the first half output shaft and the second half output shaft, and the clutch 6 may be configured to connect or separate the first half output shaft to or from the second half output shaft. When the clutch 6 is in a connected state, the clutch 6 may connect the first half output shaft to the second half output shaft, and the engine 1 may transmit power to the differential 5 by using the second driving gear 721, the second idler 722, and the common driven gear 74 in sequence, to drive the wheels 200 of the vehicle 1000 to rotate. When the clutch 6 is in a separated state, the clutch 6 may separate the first half output shaft from the second half output shaft, to disconnect the flywheel of the engine 1 from the second driving gear 721. The second gear drive mechanism 72 is applicable to an application scenario in which a rotation direction of the output shaft 11 of the engine 1 needs to be the same as that of the common driven gear 74.

The third gear drive mechanism 73 includes a third driving gear 731, and a fifth transmission gear 732 and a sixth transmission gear 733 that are coaxially disposed. The third driving gear 731 is disposed on an output shaft 31 of the drive motor 3, and the third driving gear 731 is engaged with the fifth transmission gear 732. The sixth transmission gear 733 is engaged with the common driven gear 74. A quantity of teeth of the fifth transmission gear 732 may be greater than that of the third driving gear 731. The third driving gear 731 and the fifth transmission gear 732 form a first-stage speed reducing gear set of the two-stage speed reducing gear mechanism. A quantity of teeth of the sixth transmission gear 733 may be less than that of the common driven gear 74. The sixth transmission gear 733 and the common driven gear 74 form a second-stage speed reducing gear set of the two-stage speed reducing gear mechanism. The drive motor 3 transmits, by using the third driving gear 731, the fifth transmission gear 732, the sixth transmission gear 733, and the common driven gear 74 in sequence, power to the differential 5, to drive the wheels 200 of the vehicle 1000 to rotate. In addition, the second gear drive mechanism 72 and the third gear drive mechanism 73 share a same gear when transmitting power to the differential 5, so that a quantity of required gears are reduced, and structural complexity and costs of the transmission apparatus 7 are reduced.

It should be noted that, in some embodiments, the quantity of teeth of the fifth transmission gear 732 may be equal to or less than that of the third driving gear 731, or the quantity of teeth of the sixth transmission gear 733 may be greater than or equal to that of the common driven gear 74. However, in the foregoing two solutions, a transmission ratio of the entire third gear drive mechanism 73 is greater than 1, that is, the second gear drive mechanism 72 is a speed reducing gear mechanism, so that the two solutions are applicable to more application scenarios.

The following uses the structure of the hybrid power drive system 300 to further describe the five working modes of the vehicle 1000.

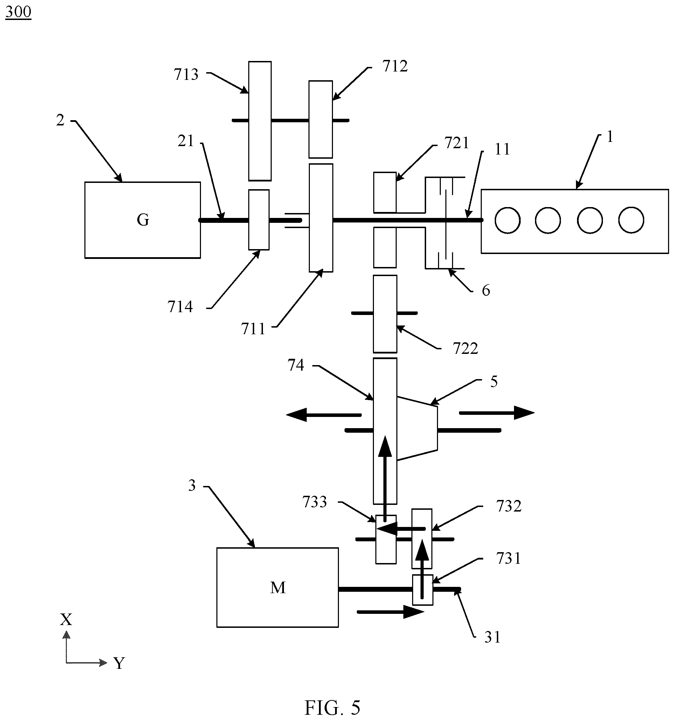

When the vehicle 1000 is in the electric drive mode shown in FIG. 5 (arrows in the figure indicate power output directions), the controller 8 controls both the engine 1 and the generator 2 not to work. The clutch 6 separates the output shaft 11 of the engine 1 from the second gear drive mechanism 72. The power battery 4 supplies power to the drive motor 3. The drive motor 3 transmits, by using the third driving gear 731, the fifth transmission gear 732, the sixth transmission gear 733, and the common driven gear 74 in sequence, the power to the differential 5, to drive the wheels 200 of the vehicle 1000 to rotate.

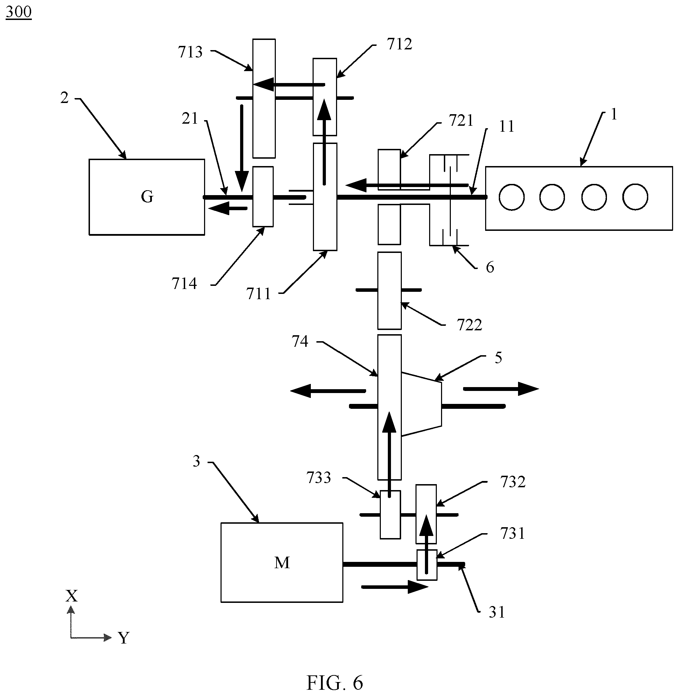

When the vehicle 1000 is in the serial extended-range mode shown in FIG. 6 (arrows in the figure indicate power output directions), the controller 8 controls both the engine 1 and the generator 2 to work. The clutch 6 separates the output shaft 11 of the engine 1 from the second gear drive mechanism 72. The engine 1 drives, by using the first driving gear 711, the first transmission gear 712, the second transmission gear 713, and the driven gear 714 in sequence, the rotor of the generator 2 to rotate and generate electric energy. The electric energy that is generated by the generator 2 is stored in the power battery 4. The power battery 4 supplies power to the drive motor 3. The drive motor 3 transmits, by using the third driving gear 731, the fifth transmission gear 732, the sixth transmission gear 733, and the common driven gear 74 in sequence, the power to the differential 5, to drive the wheels 200 of the vehicle 1000 to rotate.

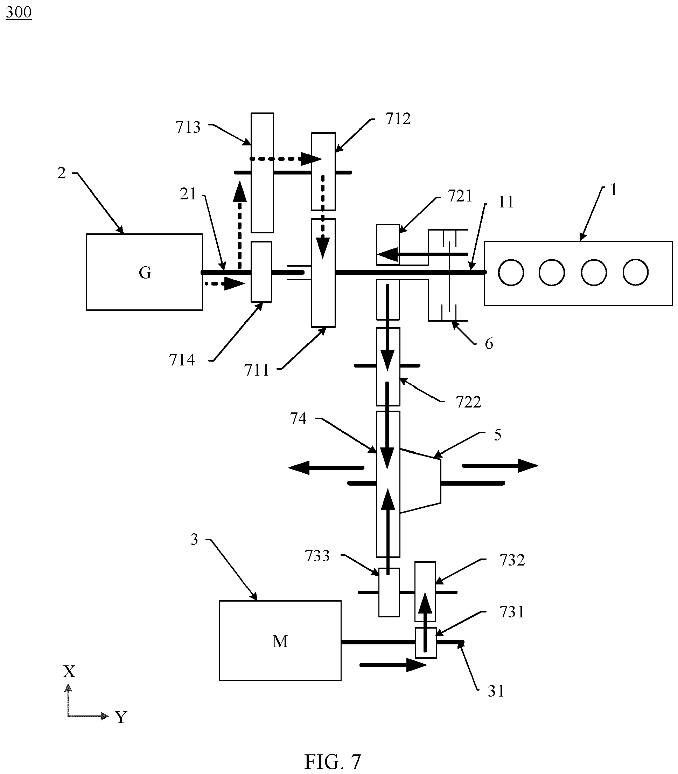

When the vehicle 1000 is in the parallel drive mode shown in FIG. 7 (arrows in the figure indicate power output directions), the controller 8 controls both the engine 1 and the drive motor 3 to work. The clutch 6 connects the output shaft 11 of the engine 1 to the second gear drive mechanism 72. The controller controls the generator 2 not to work. The engine 1 may drive, by using the second driving gear 721, the second idler 722, and the common driven gear 74 in sequence, the differential 5 to run, the power battery 4 supplies power to the drive motor 3, the drive motor 3 drives, by using the third driving gear 731, the fifth transmission gear 732, the sixth transmission gear 733, and the common driven gear 74 in sequence, the differential 5 to run. It should be noted that, in this case, a rotational speed of the second idler 722 is the same as that of the sixth transmission gear 733.

It should be noted that, when the power requirement of the vehicle 1000 is high, the controller controls the engine 1, the generator 2, and the drive motor 3 to work. The clutch 6 connects the output shaft 11 of the engine 1 to the second gear drive mechanism 72. In this case, the generator 2 is used as a motor. The generator 2 drives, by using the driven gear 714, the second transmission gear 713, and the first transmission gear 712 in sequence, the first driving gear 711 to rotate (as shown by dotted arrows in FIG. 7). In addition, the engine 1 may drive the first driving gear 711 and the second driving gear 721 on the output shaft 11 to rotate, that is, the generator 2 and the engine 1 are dynamically coupled at the output shaft 11, and a rotational speed of the first driving gear 711 is the same as that of the second driving gear 721. Then, the power is transmitted to the second idler 722 and the common driven gear 74, to drive the differential 5 to run. The drive motor 3 drives, by using the third driving gear 731, the fifth transmission gear 732, the sixth transmission gear 733, and the common driven gear 74 in sequence, the differential 5 to run. Power of the generator 2 and the engine 1 in this embodiment of this application is coupled to the drive motor 3 at the common driven gear 74, and the common driven gear 74 is coaxially disposed with the differential 5, so that the engine 1, the generator 2, and the drive motor 3 may be distributed on two radial sides of the differential 5. Therefore, the engine 1, the generator 2, and the drive motor 3 in the hybrid power drive system 300 in this embodiment of this application may be more flexibly disposed.

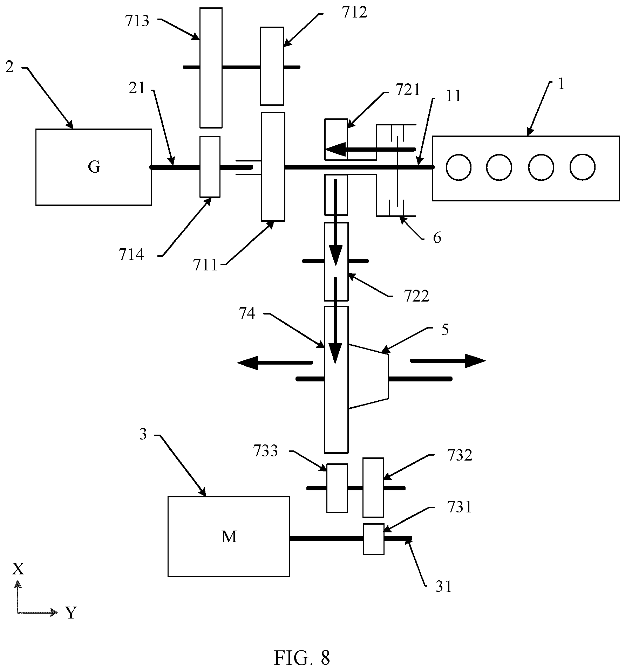

When the vehicle 1000 is in the engine direct drive mode shown in FIG. 8 (arrows in the figure indicate power output directions), the controller 8 controls the engine 1 to work. The clutch 6 connects the output shaft 11 of the engine 1 to the second gear drive mechanism 72. The controller controls both the generator 2 and the drive motor 3 not to work. The engine 1 drives, by using the second driving gear 721, the second idler 722, and the common driven gear 74 in sequence, the differential 5 to run. In addition, when the engine 1 has high efficiency and the power battery 4 is not fully charged, the controller 8 controls both the engine 1 and the generator 2 to work. The clutch 6 connects the output shaft 11 of the engine 1 to the second gear drive mechanism 72. The controller controls the drive motor 3 not to work. In addition to driving the differential 5 to run, the engine 1 further drives, by using the first driving gear 711, the first transmission gear 712, the second transmission gear 713, and the driven gear 714 in sequence, the rotor of the generator 2 to rotate and generate electric energy. The electric energy that is generated by the generator 2 is stored in the power battery 4.

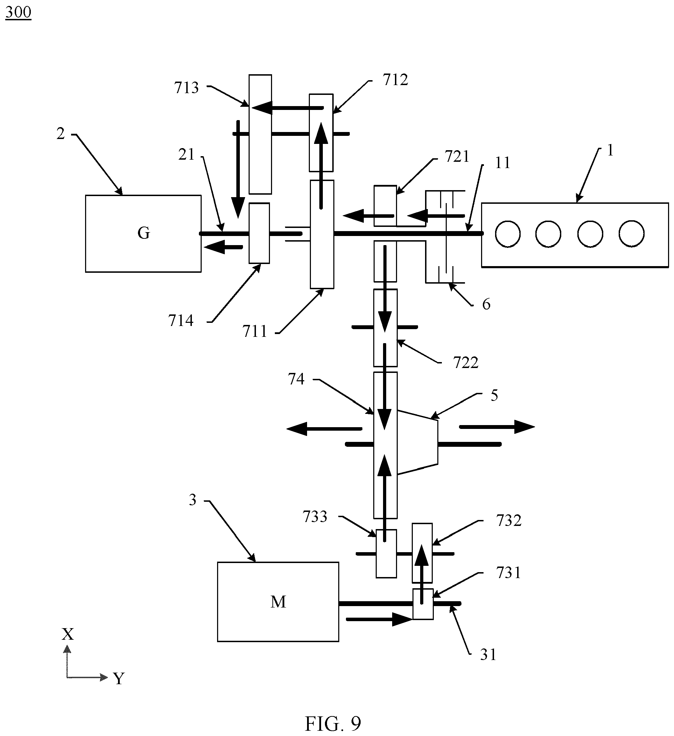

When the vehicle 1000 is in the hybrid drive mode shown in FIG. 9 (arrows in the figure indicate power output directions), the controller 8 controls the engine 1, the generator 2, and the drive motor 3 to work. The clutch 6 connects the output shaft 11 of the engine 1 to the second gear drive mechanism 72. The engine 1 drives, by using the first driving gear 711, the first transmission gear 712, the second transmission gear 713, and the driven gear 714 in sequence, the rotor of the generator 2 to rotate and generate electric energy, the electric energy that is generated by the generator 2 is stored in the power battery 4. The power battery 4 supplies power to the drive motor 3. The drive motor 3 drives, by using the third driving gear 731, the fifth transmission gear 732, the sixth transmission gear 733, and the common driven gear 74 in sequence, the differential 5 to run. The engine 1 drives, by using the second driving gear 721, the second idler 722, and the common driven gear 74 in sequence, the differential 5 to run.

### Example 2

The structure of the hybrid power drive system in this example is similar to that of the hybrid power drive system in Example 1. A difference lies in that the second gear drive mechanism 72 and the common driven gear 74 in this example may form a two-stage speed reducing gear mechanism.

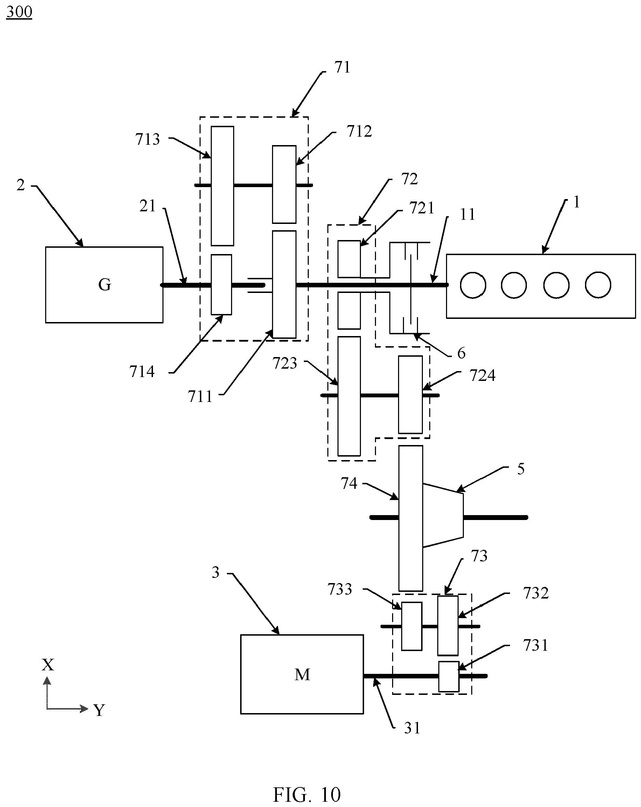

Refer to FIG. 10, the second gear drive mechanism 72 in this example includes the second driving gear 721, and the third transmission gear 723 and the fourth transmission gear 724 that are coaxially disposed. The second driving gear 721 is disposed on the output shaft 11 of the engine 1, and the third transmission gear 723 is engaged with the second driving gear 721. The fourth transmission gear 724 is engaged with the common driven gear 74. In addition, a quantity of teeth of the second driving gear 721 may be less than that of the third transmission gear 723. The second driving gear 721 and the third transmission gear 723 form a first-stage speed reducing gear set of the two-stage speed reducing gear mechanism. A quantity of teeth of the fourth transmission gear 724 may be less than that of the common driven gear 74. The fourth transmission gear 724 and the common driven gear 74 form a second-stage speed reducing gear set of the two-stage speed reducing gear mechanism. Similarly, the second gear drive mechanism 72 and the third gear drive mechanism 73 share a same gear when transmitting power to the differential 5, so that a quantity of required gears are reduced, and structural complexity and costs of the transmission apparatus 7 are reduced. In addition, the second gear drive mechanism 72 and the common driven gear 74 form the two-stage deceleration gear mechanism, so that power of the hybrid power drive system 300 may be more flexibly distributed.

It should be noted that, in some embodiments, the quantity of teeth of the second driving gear 721 may be equal to or greater than that of the third transmission gear 723, or the quantity of teeth of the second driving gear 721 may be equal to or greater than that of the third transmission gear 723. However, in the foregoing two solutions, a transmission ratio of the entire second gear drive mechanism 72 is greater than 1, that is, the second gear drive mechanism 72 is a speed reducing gear mechanism, so that the two solutions are applicable to more application scenarios.

The hybrid power drive system in this example may also implement the five working modes of the hybrid power drive system in Example 1, and details are not described herein again.

### Example 3

The structure of the hybrid power drive system 300 in this example is similar to that of the hybrid power drive system 300 in Example 1, and a difference lies in that the first gear drive mechanism 71 in this example is a single-row planet gear set.

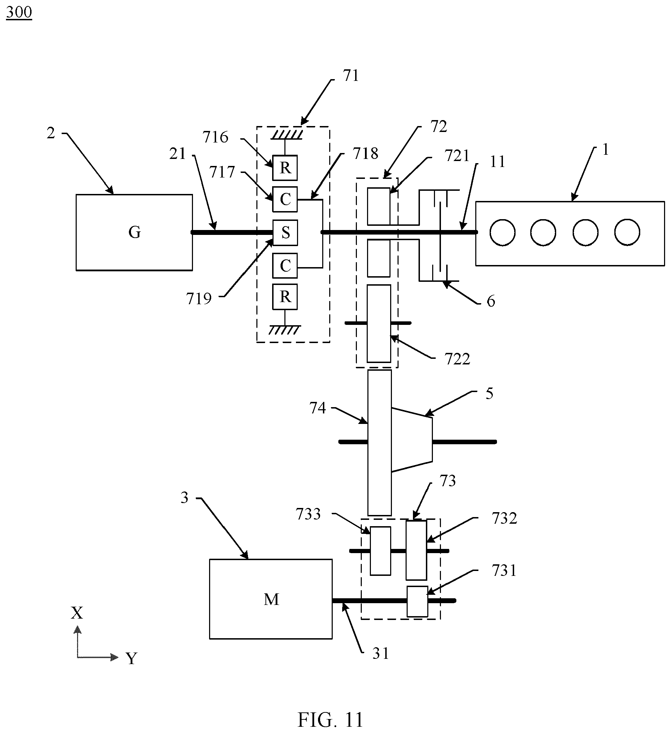

Refer to FIG. 11. The first gear drive mechanism 71 in this example includes a ring gear (ring gear) 716, a plurality of planet gears (planet gear) 717, a planet carrier (planet carrier) 718, and a sun gear (sun gear) 719. The plurality of planet gears 717 are disposed on the planet carrier 718. The plurality of planet gears 717 are circumferentially distributed along the inner ring gear 716 and engaged with the inner ring gear 716. The sun gear 719 is engaged with the plurality of planet gears 717, the input shaft 21 of the generator 2 is fastened to the sun gear 719, the planet carrier 718 is fastened to the output shaft 11 of the engine 1, and the inner ring gear 716 is fastened to the housing of the generator 2. In comparison with the solution shown in FIG. 10, the single-row planet gear set 717 has a smaller dimension in the Y-axis direction and is more suitably applicable to the hybrid power drive system 300 with a high requirement in the Y-axis direction. Similarly, the hybrid power drive system in this example may also implement five working modes of the hybrid power drive system in Example 1, and details are not described herein again.

It should be noted that the generator 2, the engine 1, and the transmission apparatus 7 may be accommodated in different housings, or may be accommodated in a same housing. Therefore, for the latter, the inner ring gear 716 may be fastened in a housing in which the generator 2, the engine 1, and the transmission apparatus 7 are accommodated.

### Example 4

A structure of the hybrid power drive system 300 in this example is similar to that of the hybrid power drive system 300 in Example 3. A difference lies in that the second gear drive mechanism 72 and the common driven gear 74 in this example may form a two-stage speed reducing gear mechanism.

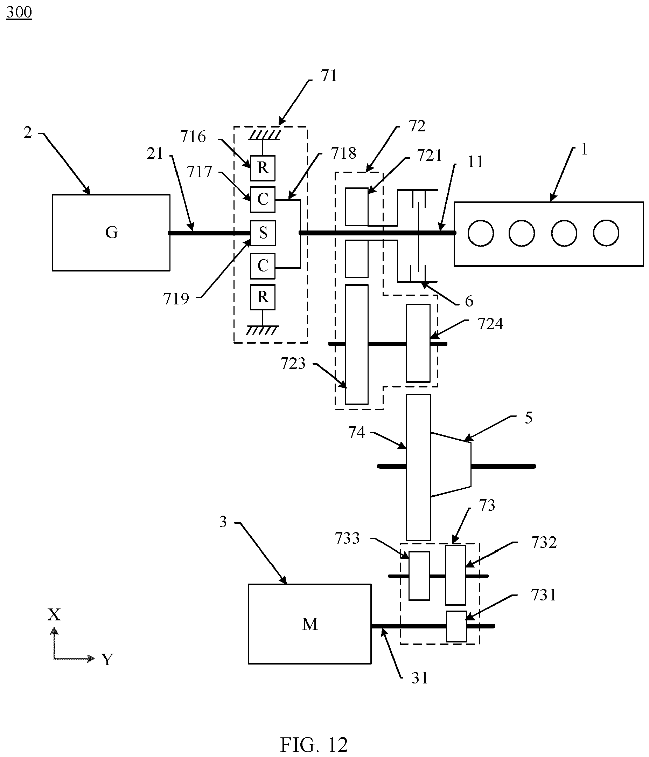

Refer to FIG. 12, the second gear drive mechanism 72 in this example includes the second driving gear 721, and the third transmission gear 723 and the fourth transmission gear 724 that are coaxially disposed. The second driving gear 721 is disposed on the output shaft 11 of the engine 1, and the third transmission gear 723 is engaged with the second driving gear 721. The fourth transmission gear 724 is engaged with the common driven gear 74. In addition, the quantity of teeth of the second driving gear 721 may be less than that of the third transmission gear 723. The second driving gear 721 and the third transmission gear 723 form a first-stage speed reducing gear set of the two-stage speed reducing gear mechanism. The quantity of teeth of the fourth transmission gear 724 may be less than that of the common driven gear 74. The fourth transmission gear 724 and the common driven gear 74 form a second-stage speed reducing gear set of the two-stage speed reducing gear mechanism. Similarly, the second gear drive mechanism 72 and the third gear drive mechanism 73 share a same gear when transmitting power to the differential 5, so that a quantity of required gears is reduced, and structural complexity and costs of the transmission apparatus 7 are reduced. In addition, the second gear drive mechanism 72 and the common driven gear 74 form the two-stage deceleration gear mechanism, so that power of the hybrid power drive system 300 may be more flexibly distributed.

It should be noted that, in some embodiments, the quantity of teeth of the second driving gear 721 may be equal to or greater than that of the third transmission gear 723, or the quantity of teeth of the second driving gear 721 may be equal to or greater than that of the third transmission gear 723. However, in the foregoing two solutions, a transmission ratio of the entire second gear drive mechanism 72 is greater than 1, that is, the second gear drive mechanism 72 is a speed reducing gear mechanism, so that the two solutions are applicable to more application scenarios.

Similarly, the hybrid power drive system in this example may also implement the five working modes of the hybrid power drive system in Example 1, and details are not described herein again.

### Example 5

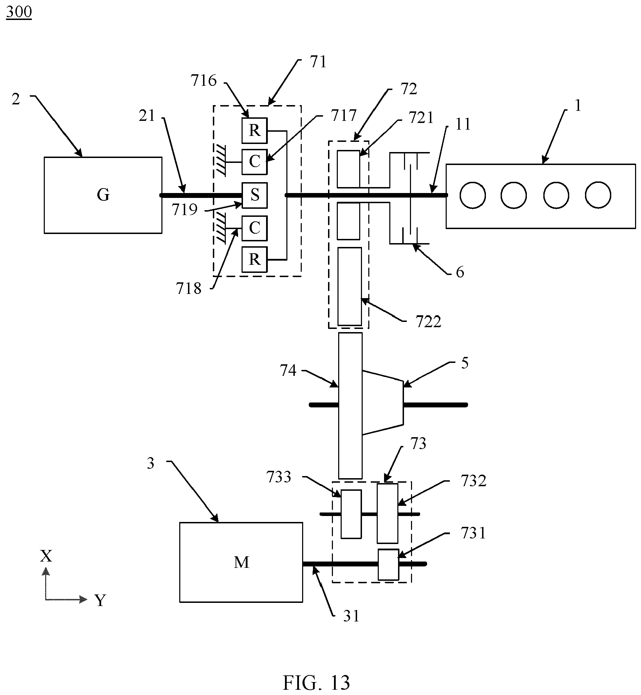

A structure of the hybrid power drive system 300 in this example is similar to that of the hybrid power drive system 300 in Example 3. A difference lies in that: Refer to FIG. 13, in the second gear drive mechanism 72 in this example, the planet carrier 718 is fastened to the housing of the generator 2, and the inner ring gear 716 is fastened to the output shaft 11 of the engine 1. This can adapt to different housing shapes, and facilitates installation of the second gear drive mechanism 72. The hybrid power drive system in this example may also implement the five working modes of the hybrid power drive system in Example 1, and details are not described herein again.

### Example 6

A structure of the hybrid power drive system 300 in this example is similar to that of the hybrid power drive system 300 in Example 5. A difference lies in that the second gear drive mechanism 72 and the common driven gear 74 in this example may form a two-stage speed reducing gear mechanism.

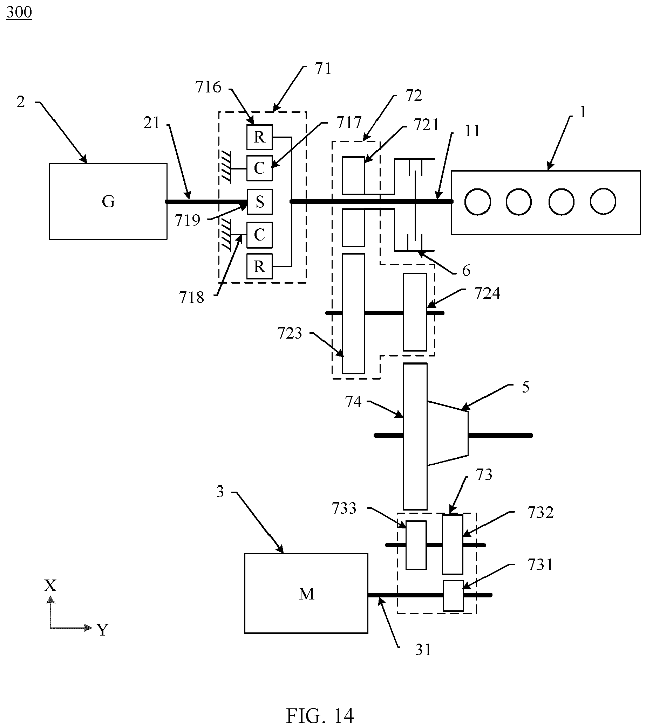

Refer to FIG. 14, the second gear drive mechanism 72 in this example includes the second driving gear 721, and the third transmission gear 723 and the fourth transmission gear 724 that are coaxially disposed. The second driving gear 721 is disposed on the output shaft 11 of the engine 1, and the third transmission gear 723 is engaged with the second driving gear 721. The fourth transmission gear 724 is engaged with the common driven gear 74. In addition, the quantity of teeth of the second driving gear 721 may be less than that of the third transmission gear 723. The second driving gear 721 and the third transmission gear 723 form a first-stage speed reducing gear set of the two-stage speed reducing gear mechanism. The quantity of teeth of the fourth transmission gear 724 may be less than that of the common driven gear 74. The fourth transmission gear 724 and the common driven gear 74 form a second-stage speed reducing gear set of the two-stage speed reducing gear mechanism. Similarly, the second gear drive mechanism 72 and the third gear drive mechanism 73 share a same gear when transmitting power to the differential 5, so that a quantity of required gears is reduced, and structural complexity and costs of the transmission apparatus 7 are reduced. In addition, the second gear drive mechanism 72 and the common driven gear 74 form the two-stage deceleration gear mechanism, so that power of the hybrid power drive system 300 may be more flexibly distributed.

It should be noted that, in some embodiments, the quantity of teeth of the second driving gear 721 may be equal to or greater than that of the third transmission gear 723, or the quantity of teeth of the second driving gear 721 may be equal to or greater than that of the third transmission gear 723. However, in the foregoing two solutions, a transmission ratio of the entire second gear drive mechanism 72 is greater than 1, that is, the second gear drive mechanism 72 is a speed reducing gear mechanism, so that the two solutions are applicable to more application scenarios.

Similarly, the hybrid power drive system in this example may also implement the five working modes of the hybrid power drive system in Example 1, and details are not described herein again.

### Example 7

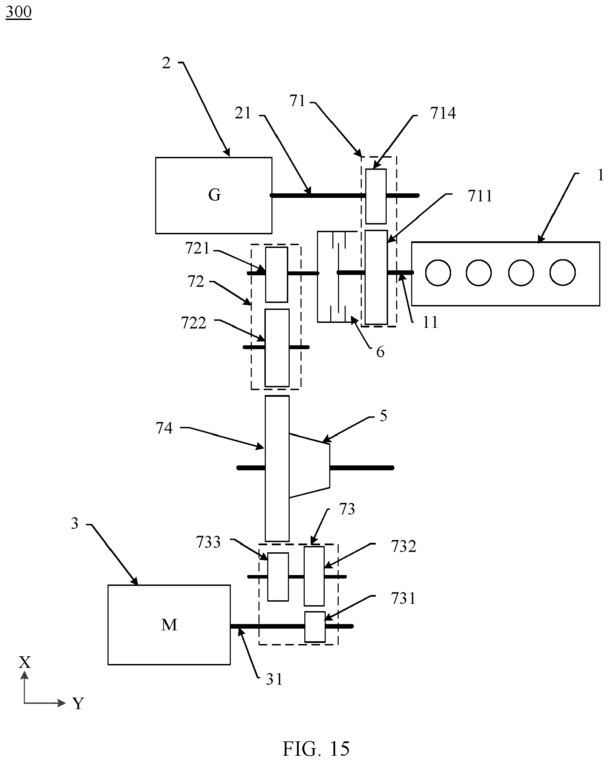

A structure of the hybrid power drive system 300 in this example is similar to that of the hybrid power drive system 300 in Example 1. A difference lies in that, as shown in FIG. 15, the input shaft 21 of the generator 2 is parallel to the output shaft 11 of the engine 1, and the engine 1 is located between the generator 2 and the differential 5. The output shaft 31 of the drive motor 3 is also parallel to the output shaft 11 of the engine 1. Therefore, a plurality of gears in the first gear drive mechanism 71 may be staggered between the output shaft 11 of the engine 1 and the input shaft 21 of the generator 2 in the X-axis direction, and the dimensions of the hybrid power drive system 300 are reduced as much as possible in the Y-axis direction. This meets a high requirement on designing dimensions of the vehicle body 100 of the vehicle 1000 in the Y-axis direction. In addition, the first gear drive mechanism 71 may be a one-stage speed increasing gear mechanism.

Refer to FIG. 15. The first gear drive mechanism 71 includes the first driving gear 711 and the driven gear 714. The first driving gear 711 is disposed on the output shaft 11 of the engine 1. The driven gear 714 is disposed on the input shaft 21 of the generator 2, the first driving gear 711 is engaged with the driven gear 714, and the quantity of teeth of the first driving gear 711 is greater than that of the driven gear 714. Therefore, the first driving gear 711 and the driven gear 714 form a one-stage speed increasing gear mechanism. In addition, the clutch 6 is located between the first driving gear 711 and the second driving gear 721. In this example, the second gear drive mechanism 72 in the hybrid power drive system 300 has a few gears. When the engine 1 is not required to drive the differential 5 to run, the clutch 6 can control the second gear drive mechanism 72 to be completely disconnected from the engine 1. This is more conducive to protection of the engine 1. In addition, the first gear drive mechanism 71 and the second gear drive mechanism 72 are independent of each other.

It should be noted that, in some embodiments, the first gear drive mechanism 71 may also be configured only for transmission, that is, the quantity of teeth of the first driving gear 711 is equal to that of the driven gear 714. Therefore, a rotational speed of the output shaft 11 of the engine 1 is equal to that of the input shaft 21 of the generator 2.

In addition, the hybrid power drive system in this example may also implement the five working modes of the hybrid power drive system in Example 1, and details are not described herein again.

### Example 8

A structure of the hybrid power drive system 300 in this example is similar to that of the hybrid power drive system 300 in Example 7. A difference lies in that the structure of the first gear drive mechanisms 71 is different.

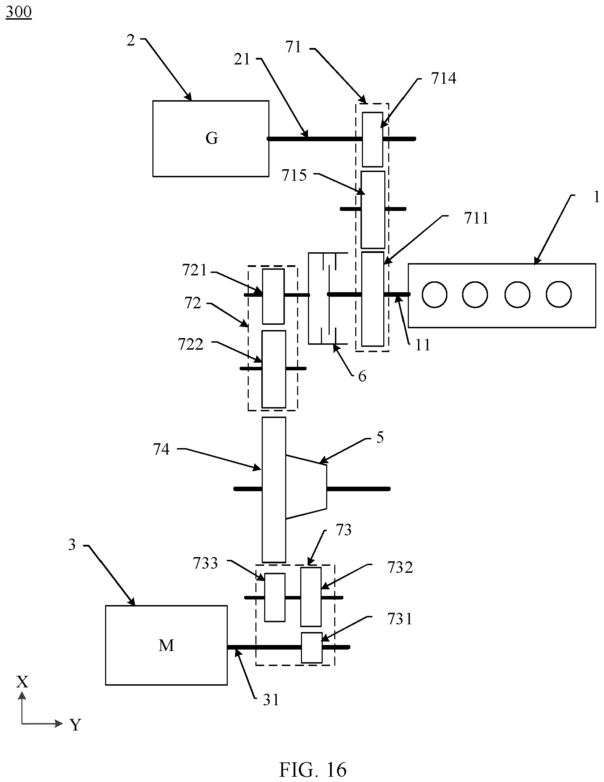

Refer to FIG. 16. The first gear drive mechanism 71 in this embodiment includes the first driving gear 711, the driven gear 714, and the first idler 715. The first driving gear 711 is disposed on the output shaft 11 of the engine 1. The driven gear 714 is disposed on the input shaft 21 of the generator 2, and the quantity of teeth of the first driving gear 711 is greater than that of the driven gear 714. The first idler 715 is disposed between the first driving gear 711 and the driven gear 714, and engaged with the first driving gear 711 and the driven gear 714. This solution is applicable to an application scenario in which the input shaft 21 of the generator 2 and the output shaft 11 of the engine 1 are disposed opposite to each other and a rotation direction of the input shaft 21 of the generator 2 is the same as that of the output shaft 11 of the engine 1.

It should be noted that the first gear drive mechanism 71 may also be configured only for transmission, that is, the quantity of teeth of the first driving gear 711 is equal to that of the driven gear 714. Therefore, the rotational speed of the output shaft 11 of the engine 1 is equal to that of the input shaft 21 of the generator 2, so that this solution can be applicable to an application scenario in which there is a distance between the engine 1 and the generator 2, and there is no speed increasing requirement.

Similarly, the hybrid power drive system in this example may also implement the five working modes of the hybrid power drive system in Example 1, and details are not described herein again.

### Example 9

A structure of the hybrid power drive system 300 in this example is similar to that of the hybrid power drive system 300 in Example 7. A difference lies in that the second gear drive mechanism 72 and the common driven gear 74 in this example may form a two-stage speed reducing gear mechanism.

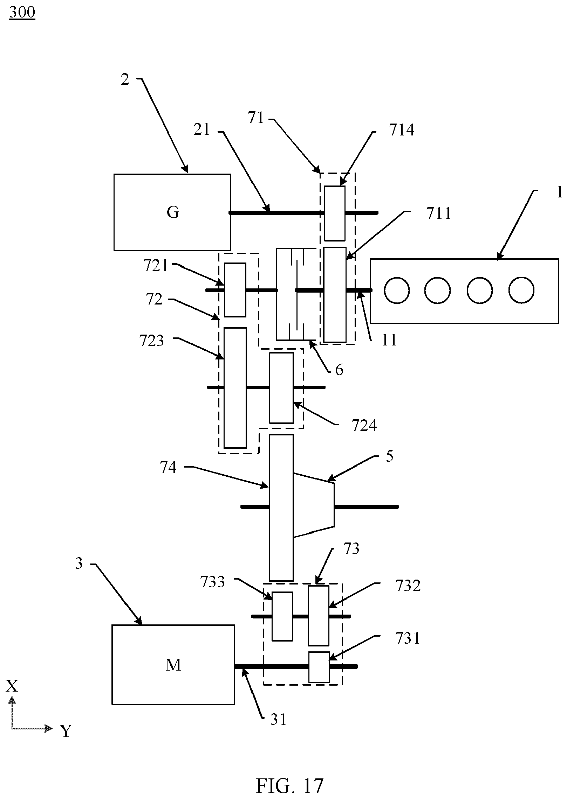

Refer to FIG. 17, the second gear drive mechanism 72 in this example includes the second driving gear 721, and the third transmission gear 723 and the fourth transmission gear 724 that are coaxially disposed. The second driving gear 721 is disposed on the output shaft 11 of the engine 1, and the third transmission gear 723 is engaged with the second driving gear 721. The fourth transmission gear 724 is engaged with the common driven gear 74. In addition, the quantity of teeth of the second driving gear 721 may be less than that of the third transmission gear 723. The second driving gear 721 and the third transmission gear 723 form a first-stage speed reducing gear set of the two-stage speed reducing gear mechanism. The quantity of teeth of the fourth transmission gear 724 may be less than that of the common driven gear 74. The fourth transmission gear 724 and the common driven gear 74 form a second-stage speed reducing gear set of the two-stage speed reducing gear mechanism. Similarly, the second gear drive mechanism 72 and the third gear drive mechanism 73 share a same gear when transmitting power to the differential 5, so that a quantity of required gears is reduced, and structural complexity and costs of the transmission apparatus 7 are reduced. In addition, the second gear drive mechanism 72 and the common driven gear 74 form the two-stage deceleration gear mechanism, so that power of the hybrid power drive system 300 may be more flexibly distributed.

It should be noted that, in some embodiments, the quantity of teeth of the second driving gear 721 may be equal to or greater than that of the third transmission gear 723, or the quantity of teeth of the second driving gear 721 may be equal to or greater than that of the third transmission gear 723. However, in the foregoing two solutions, a transmission ratio of the entire second gear drive mechanism 72 is greater than 1, that is, the second gear drive mechanism 72 is a speed reducing gear mechanism, so that the two solutions can be applicable to more application scenarios.

In addition, the hybrid power drive system in this example may also implement the five working modes of the hybrid power drive system in Example 1, and details are not described herein again.

Certainly, it should be noted that the structure of the hybrid power drive system in this embodiment of this application is not limited to the foregoing nine examples, and another structural combination solution may also be used. Examples are not provided for description one by one in this application.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A hybrid power drive system, comprising:
an engine, wherein the engine is configured to output power;
a generator, wherein the generator is configured to convert the power output by the engine into electric energy;
a first gear drive mechanism, wherein the first gear drive mechanism is located between the engine and the generator, an input end of the first gear drive mechanism is in transmission connection to an output shaft of the engine, and an output end of the first gear drive mechanism is in transmission connection to an input shaft of the generator;
a differential;
a second gear drive mechanism, wherein the second gear drive mechanism is located between the differential and the output shaft of the engine, and connected to the differential and the output shaft of the engine;
a clutch, wherein the clutch is disposed on the output shaft of the engine, and the clutch is configured to connect or separate the output shaft of the engine to or from the second gear drive mechanism;
a drive motor.
a power battery, wherein the power battery is electrically connected to the generator and the drive motor, and the drive motor is configured to convert electric energy output by the power battery into kinetic energy; and
a third gear drive mechanism, wherein the third gear drive mechanism is configured to connect an output shaft of the drive motor to the differential; the engine, the generator, and the first gear drive mechanism are distributed in sequence in an axial direction of the engine; and the second gear drive mechanism, the differential, the third gear drive mechanism, and the drive motor are distributed in sequence in a direction that is intersected with the axial direction of the engine.

2. The hybrid power drive system according to claim 1, wherein the hybrid power drive system further comprises:
a controller, configured to:
control both the engine and the generator not to work, wherein the clutch separates the output shaft of the engine from the second gear drive mechanism, the power battery supplies power to the drive motor, and the drive motor drives, by using the third gear drive mechanism, the differential to run, and the hybrid power drive system is in an electric drive mode;
control the engine and the generator to work, wherein the clutch separates the output shaft of the engine from the second gear drive mechanism, the engine drives, by using the first gear drive mechanism, a rotor of the generator to rotate and generate electric energy, the electric energy that is generated by the generator is stored in the power battery, the power battery supplies power to the drive motor, and the drive motor drives, by using the third gear drive mechanism, the differential to run, and the hybrid power drive system is in a serial extended-range mode;
control the engine to work and control the generator not to work, wherein the clutch connects the output shaft of the engine to the second gear drive mechanism, the engine drives, by using the second gear drive mechanism, the differential to run, the power battery supplies power to the drive motor, and the drive motor drives, by using the third gear drive mechanism, the differential to run, and the hybrid power drive system is in a parallel drive mode;
control the engine to work, wherein the clutch connects the output shaft of the engine to the second gear drive mechanism, and control the generator and the drive motor not to work, wherein the engine drives, by using the second gear drive mechanism, the differential to run, and the hybrid power drive system is in an engine direct drive mode; or
control the engine, the generator, and the drive motor to work, wherein the clutch connects the output shaft of the engine to the second gear drive mechanism, the engine drives, by using the first gear drive mechanism, a rotor of the generator to rotate and generate electric energy, the electric energy that is generated by the generator is stored in the power battery, the power battery supplies power to the drive motor, the drive motor drives, by using the third gear drive mechanism, the differential to run, and the engine drives, by using the second gear drive mechanism, the differential to run, and the hybrid power drive system is in a hybrid drive mode.

3. The hybrid power drive system according to claim 1 or 2, wherein the input shaft of the generator is coaxially disposed with the output shaft of the engine.

4. The hybrid power drive system according to claim 1 or 2, wherein the input shaft of the generator is parallel to the output shaft of the engine, and the engine is located between the generator and the differential.

5. The hybrid power drive system according to claim 4, wherein the first gear drive mechanism comprises:
a first driving gear, wherein the first driving gear is disposed on the output shaft of the engine; and
a driven gear, wherein the driven gear is disposed on the input shaft of the generator, the first driving gear is engaged with the driven gear, and a quantity of teeth of the first driving gear is greater than or equal to that of the driven gear.

6. The hybrid power drive system according to claim 4, wherein the first gear drive mechanism comprises:
a first driving gear, wherein the first driving gear is disposed on the output shaft of the engine;
a driven gear, wherein the driven gear is disposed on the input shaft of the generator, and a quantity of teeth of the first driving gear is greater than or equal to that of the driven gear; and
a first idler, wherein the first idler is disposed between the first driving gear and the driven gear, and is engaged with the first driving gear and the driven gear.

7. The hybrid power drive system according to any one of claims 1 to 4, wherein the first gear drive mechanism is a speed increasing gear mechanism, and the speed increasing gear mechanism comprises:
a first driving gear, wherein the first driving gear is disposed on the output shaft of the engine;
a first transmission gear, wherein the first transmission gear is engaged with the first driving gear;
a second transmission gear, wherein the second transmission gear is coaxially disposed with the first transmission gear; and
a driven gear, wherein the driven gear is disposed on the input shaft of the generator, and the driven gear is engaged with the second transmission gear.

8. The hybrid power drive system according to any one of claims 1 to 4, wherein the first gear drive mechanism is a single-row planet gear set, and the single-row planet gear set comprises:
an inner ring gear;
a planet carrier;
a plurality of planet gears, wherein the plurality of planet gears are disposed on the planet carrier, and the plurality of planet gears are circumferentially distributed along the inner ring gear and engaged with the inner ring gear; and
a sun gear, wherein the sun gear is engaged with the plurality of planet gears;
the input shaft of the generator is fastened to the sun gear, one of the planet carrier and the inner ring gear is fastened to the output shaft of the engine, and the other of the planet carrier and the inner ring gear is fastened to a housing of the generator.

9. The hybrid power drive system according to any one of claims 1 to 8, wherein the hybrid power drive system further comprises:
a common driven gear, wherein the common driven gear is coaxially disposed with the differential;
the second gear drive mechanism comprises a second driving gear, and a third transmission gear and a fourth transmission gear that are coaxially disposed, wherein the second driving gear is disposed on the output shaft of the engine, the third transmission gear is engaged with the second driving gear, the fourth transmission gear is engaged with the common driven gear, and the second gear drive mechanism and the common driven gear form a first speed reducing gear mechanism; and
the third gear drive mechanism comprises a third driving gear, and a fifth transmission gear and a sixth transmission gear that are coaxially disposed, wherein the third driving gear is disposed on the output shaft of the drive motor and engaged with the fifth transmission gear, the sixth transmission gear is engaged with the common driven gear, and the third gear drive mechanism and the common driven gear form a second speed reducing gear mechanism.

10. The hybrid power drive system according to any one of claims 1 to 8, wherein the hybrid power drive system further comprises:
a common driven gear, wherein the common driven gear is coaxially disposed with the differential;
the second gear drive mechanism comprises a second driving gear and a second idler, wherein the second driving gear is disposed on the output shaft of the engine, the second idler is located between the common driven gear and the second driving gear, and the second idler is engaged with the common driven gear and the second driving gear, and a quantity of teeth of the second driving gear is less than that of the common driven gear; and
the third gear drive mechanism comprises a third driving gear, and a fifth transmission gear and a sixth transmission gear that are coaxially disposed, wherein the third driving gear is disposed on the output shaft of the drive motor and engaged with the fifth transmission gear, the sixth transmission gear is engaged with the common driven gear, and the third gear drive mechanism and the common driven gear form a second speed reducing gear mechanism.

11. A vehicle, comprising:
a vehicle body, wherein at least three wheels are rotationally disposed on the vehicle body, and at least two of the at least three wheels are disposed opposite to each other; and
the hybrid power drive system according to any one of claims 1 to 10 is disposed on the vehicle body, and the differential in the hybrid power drive system is in transmission connection to any two opposite wheels of the at least three wheels.
